# FASCICULE DE BREVET EUROPEEN

(11) **EP 0 868 339 B1**
(45) Date de publication et mention de la délivrance du brevet: **13.10.1999**
(21) Numéro de dépôt: 96941711.2
(22) Date de dépôt: 05.12.1996
(51) Int. Cl.: B62D 25/14

(54) **TABLEAU DE BORD**
ARMATURENTAFEL
DASHBOARD

(30) Priorité: 19.12.1995 FR 9515591
(43) Date de publication de la demande: 07.10.1998
(73) Titulaire: PLASTIC OMNIUM AUTO INTERIEUR, 69007 Lyon (FR)
(72) Inventeur: DAUVERGNE, Jean, F-59147 Gondecourt (FR)
(74) Mandataire: Duthoit, Michel
(86) Numéro de dépôt international: FR9601948
(87) Numéro de publication internationale: WO9722510

(56) Documents cités:
- EP-A- 0 036 925
- GB-A- 2 247 654

## Description

La présente invention concerne un tableau de bord pour véhicule, notamment terrestre.

Bien que plus particulièrement développée pour de telles applications, elle pourra également être utilisée dans tous véhicules maritimes et/ou aériens. De manière plus générale, il sera d'ailleurs possible de la mettre en oeuvre, en tant qu'aménagement intérieur réunissant différents appareillages et/ou équipements, dans tous les domaines de l'activité économique dans lesquels on rencontre des postes de conduite, de commande, de surveillance ou autre, que ce soit dans des installations fixes ou mobiles.

Actuellement, les tableaux de bord sont généralement constitués d'un panneau formé par un insert en matière plastique ou métallique moulée, ou en tôle emboutie, éventuellement recouvert d'une peau.

Ils définissent un écran en forme de coque, munie localement d'ouvertures, et servent ainsi notamment, à dissimuler, dans la cavité définie entre le tablier avant du véhicule et ladite coque, de nombreux boîtiers et/ou conduits, aptes à supporter les équipements, appareillages, réseaux de conditionnement d'air et/ou réseaux électriques prévus à ce niveau.

Lesdits boîtiers ou conduits sont, le plus souvent, assujettis au tableau de bord sur leur face arrière, certains d'entre eux débouchant au niveau desdites ouvertues.

Les dispositifs actuellement connus présentent ainsi l'inconvénient d'être de fabrication difficile. En effet, le nombre d'opérations pour la mise en place des boîtiers et/ou conduits est élevé. De plus, ces montages nécessitent le retournement des planches de bord et/ou la réalisation d'opérations en aveugle.

De nombreux tableaux de bord ainsi produits présentent donc un nombre non négligeable de défauts ou de malfaçons et doivent être retouchés, ce qui augmente encore leur coût de revient.

On peut également noter que les tableaux de bord actuellement connus présentent une certaine fragilité, notamment en raison de contrastes d'épaisseur entre des zones minces et des zones plus épaisses des panneaux qui les constituent.

Le but de la présente invention est de proposer un tableau de bord pour véhicule qui pallie les inconvénients précités et permette de diminuer le nombre d'opérations nécessaires au montage de cette partie du véhicule.

Un autre but de la présente invention est de proposer un tableau de bord pour véhicule qui permette de réaliser un montage sans retournement et sans opération effectuée en aveugle.

Un autre but de la présente invention est de proposer un tableau de bord pour véhicule qui facilite la réparation des différents éléments d'appareillages et/ou d'équipements prévus à ce niveau en favorisant leur accès et/ou leur démontage.

Un autre but de la présente invention est de proposer un tableau de bord pour véhicule qui permette de diminuer le nombre de pièces à utiliser pour constituer, monter et/ou faire fonctionner les différents éléments d'appareillages et/ou d'équipements prévus à ce niveau.

Un autre but de la présente invention est de proposer un tableau de bord pour véhicule qui puisse être utilisé dans différents modèles sans avoir à apporter de nombreuses adaptations.

Un avantage de la présente invention est de proposer un tableau de bord pour véhicule dont la solidité soit renforcée.

Un autre avantage de la présente invention est de proposer un tableau de bord pour véhicule qui permette de diminuer le niveau de bruit à l'intérieur de l'habitacle du véhicule.

D'autres buts et avantages de la présente invention apparaîtront au cours de la description qui va suivre qui n'est donnée qu'à titre indicatif et qui n'a pas pour but de la limiter.

La présente invention concerne un tableau de bord pour véhicule, apte à permettre, au moins, l'intégration d'éléments d'appareillages et/ou d'équipements intérieurs du véhicule (voir GB-A-2247754), caractérisé par le fait qu'il est constitué d'un bloc massif de matière, présentant une ou plusieurs réservations, réalisées dans la matière dudit bloc, aptes à recevoir le ou lesdits éléments d'appareillage et/ou d'équipement.

La présente invention sera mieux comprise à la lecture de la description qui va suivre accompagnée des dessins en annexe qui en font partie intégrante.
La figure 1 décrit de manière schématique, en perspective, un exemple de tableau de bord conforme à l'invention.
La figure 2 est une vue éclatée d'un exemple de tableau de bord conforme à l'invention.
La figure 3 est une coupe transversale réalisée selon un plan vertical dans la zone repérée A à la figure 1.
La figure 4 est une coupe transversale réalisée selon un plan vertical dans la zone repérée B à la figure 1.
La figure 5 est une coupe transversale réalisée selon un plan vertical dans la zone repérée C à la figure 2.
La figure 6 est une vue de coupe, réalisée selon l'axe VI-VI représenté à la figure 5.

La présente invention concerne un tableau de bord pour véhicule, notamment terrestre.

Bien que plus particulièrement destinée à de telles applications, elle pourra également être utilisée dans tous véhicules maritimes et/ou aériens. De manière plus générale, il sera d'ailleurs possible de la mettre en oeuvre, en tant qu'élément d'aménagement intérieur réunissant différents appareillages et/ou équipements, dans tous les secteurs de l'activité économique dans lesquels on est amené à rencontrer des postes de pilotage, de commande, de surveillance ou autre, que ce soit dans des installations fixes ou mobiles.

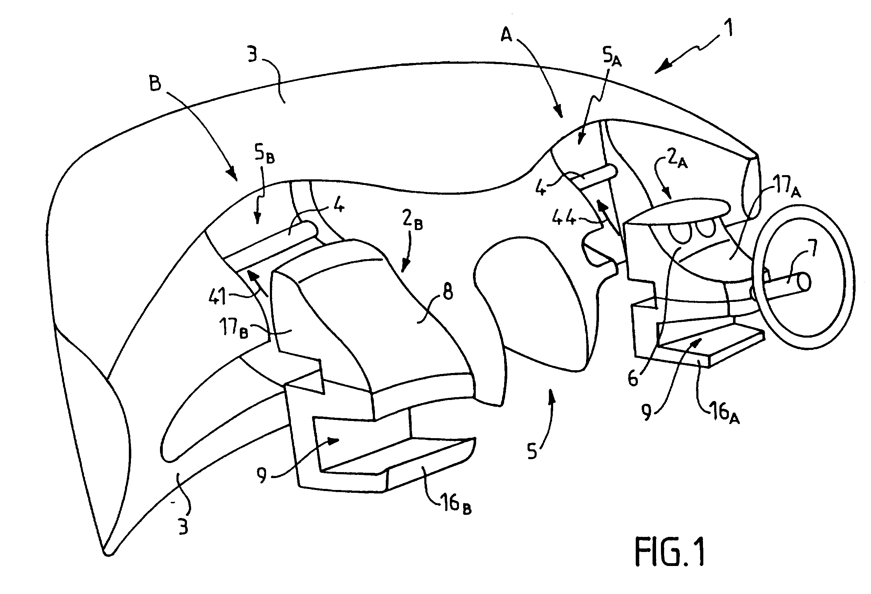

A la figure 1, on observe un exemple de tableau de bord 1 conforme à l'invention. Par tableau de bord, on entend, de manière générale, aménagement intérieur de véhicule pour passagers en tant que sous-ensemble de la caisse dudit véhicule, se trouvant à l'avant de son habitacle, apte à permettre, au moins, l'intégration d'éléments 2, 2_{A}, 2_{B} d'appareillage et/ou d'équipement intérieur du véhicule.

Selon l'invention, le tableau de bord 1 est constitué d'un bloc 3 massif de matière, notamment alvéolaire, par exemple supporté par au moins une traverse rigide 4 assujettie au véhicule. Ledit tableau de bord 1 présente ainsi un aspect « plein » et ledit bloc massif de matière 3 occupe la cavité précédemment définie entre le tablier avant et les tableaux de bord des véhicules connus.

Comme illustré, le bloc 3 présente une ou plusieurs réservations 5, 5_{A}, 5_{B} réalisées dans la matière dudit bloc, aptes à recevoir le ou lesdits éléments 2, 2_{A}, 2_{B} d'appareillage et/ou d'équipement.

Lesdites réservations 5 constituent ainsi des logements aptes à supporter les éléments 2. Il n'est donc plus nécessaire, contrairement aux tableaux de bord antérieurement connus, de prévoir de nombreux boîtiers et leur dispositif complexe de fixation pour assembler les appareillages et/ou équipements sur le tableau.

De plus, les réservations 5 étant, notamment, accessibles en face avant, le montage des éléments 2 peut s'effectuer sans retournement et sans opération réalisée en aveugle.

Selon l'exemple particulier de mise en oeuvre illustré, les éléments 2 sont constitués, par exemple, par un combiné d'instrumentation 6 comportant divers indicateurs utiles à la conduite du véhicule, une colonne de direction 7, un ensemble 8 pour sacs gonflables, différents bacs de rangement ou boîtes à gants 9.

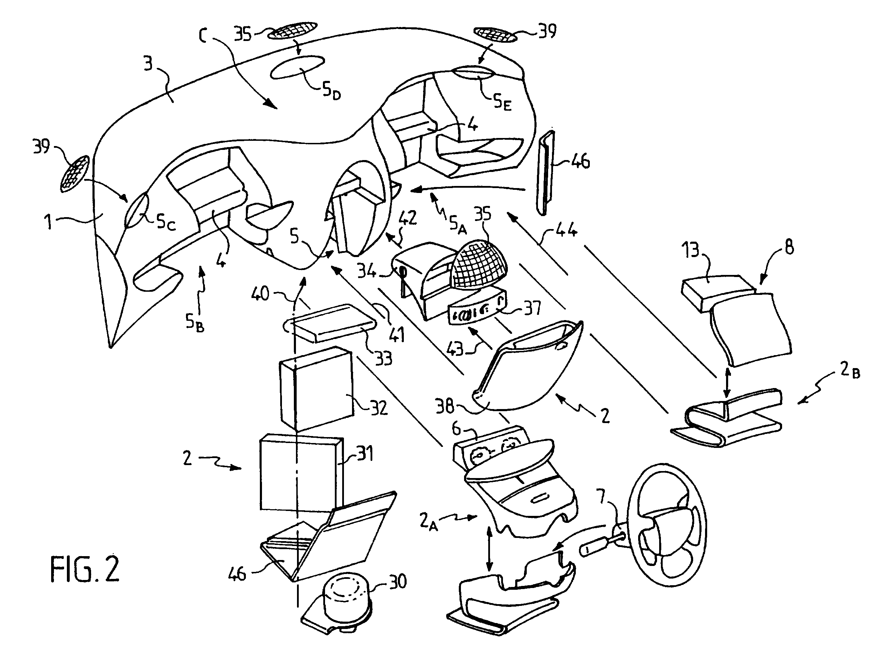

On retrouve également ces différents éléments 2 à la figure 2 où l'on constate qu'il peut s'agir, en outre, notamment, d'un dispositif de conditionnement d'air comprenant, entre autres, un pulseur et son moteur 30, un filtre 31, un évaporateur 32, un radiateur 33, un aérateur central 34, différentes grilles 35 d'aération-dégivrage et/ou un système de commande 37 ainsi que d'un dispositif auto-radio comprenant, par exemple un support 38 et différents haut-parleurs 39 répartis sur le tableau de bord 1.

Il peut également s'agir, éventuellement, de boîtes à fusibles, d'un pédalier, non représentés, et/ou autres.

Ils sont montés, les uns après les autres, dans leur réservation 5 respective, comme illustré par les flèches repérées 40 - 44.

Selon le mode de mise en oeuvre de l'invention représenté, le tableau de bord équipe ainsi toute la largeur de l'habitacle du véhicule et s'élève notamment, du plancher au pare-brise.

Toujours selon l'exemple de mise en oeuvre illustré, le bloc de matière 3 entoure la traverse 4, au moins, sur une partie de sa longueur. A ce sujet, ladite traverse 4 est constituée selon un premier mode de réalisation par une barre de renfort latéral du véhicule.

Il s'agit ainsi, par exemple, d'une barre, orientée sensiblement transversalement par rapport audit véhicule assujetti aux ailes de ce dernier, par exemple au niveau des charnières des portières avant.

Selon d'autres exemples de mise en oeuvre, la traverse support 4 pourra également être constituée, par exemple, en plusieurs morceaux, assujettis à différents niveaux de la carrosserie.

Cela étant, ladite traverse 4 est, notamment, prévue accessible, au moins partiellement, à travers certaines réservations 5_{A}, 5_{B}, Elle permet ainsi de constituer un support pour les éléments 2_{A}, 2_{B} particulièrement sensibles ou lourds.

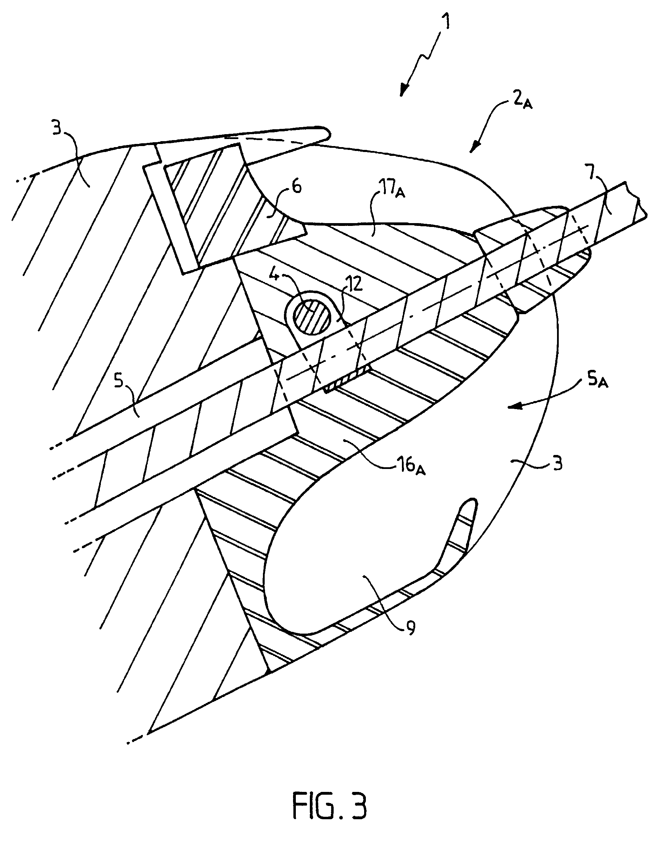

La figure 3 illustre un exemple de cette mise en oeuvre particulière de l'invention. On peut ainsi observer que la barre de direction 7 est assujettie à la traverse 4, notamment, grâce à un cavalier 12.

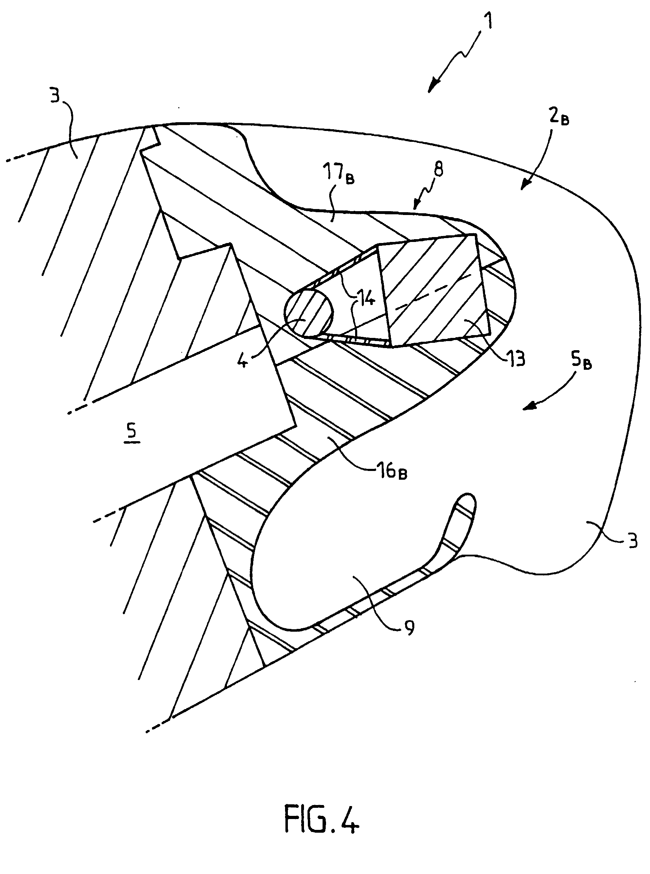

De même, selon l'exemple illustré à la figure 4, on constate qu'un sac à air 13 de l'ensemble 8 pour sac à air est assujetti à la traverse 4, notamment grâce à des pattes 14.

Le bloc 3 massif de matière est constitué, par exemple, d'un matériau synthétique expansé. Il pourra s agir, notamment, de polystyrène et/ou de polypropylène expansé.

Un tel matériau pourra être obtenu, selon des techniques connues de l'homme de l'art, par exemple, par cohésion de billes soudées entre elles, notamment par fusion locale sous pression.

Par ailleurs, le bloc de matière 3 présente, au moins partiellement, par exemple, une surface traitée de manière à améliorer son aspect et/ou est revêtu d'une peau.

On peut d'ailleurs noter que, dans le cas de l'utilisation d'un matériau expansé, le choix de la matière retenue pour constituer le bloc 3 facilitera ledit traitement de surface. Si désiré, on pourra ainsi éviter l'utilisation d'une couche spécifique de revêtement.

Comme illustré aux figures 1 à 4, une même réservation 5 est apte, notamment à recevoir des éléments 2 différents. A titre d'exemple, les deux réservations 5_{A}, 5_{B}, notamment identiques et disposées symétriquement par rapport au plan de symétrie du véhicule, reçoivent indifféremment les éléments 2_{A} ou 2_{B},

Il est ainsi possible, notamment, d'inverser, comme illustré par les figures 1 et 2, les éléments 2_{A}, 2_{B}, du côté conducteur et du côté passager. L'invention permet donc d'utiliser un même tableau de bord 1 pour des véhicules présentant une direction à droite et pour ceux présentant une direction à gauche, cette opération ne nécessitant qu'un nombre minime d'adaptations.

Pour faciliter cette opération, le bloc de matière 3 présente un même profil au niveau desdites réservations 5_{A}, 5_{B}.

Selon un mode particulier de réalisation de l'invention, les éléments 2 constituent des blocs fonctionnels, aptes à s'insérer dans lesdites réservations 5, formés de sous-modules spécifiques.

Ainsi, selon l'exemple illustré à la figure 3, les éléments 2_{A} prévus du côté passager constituent un poste de pilotage, apte à s'insérer dans les réservations 5_{A}, 5_{B}.

Ledit poste de pilotage est formé, notamment, d'un module inférieur 16_{A}, d'un module supérieur 17_{A} et, entre ces deux derniers, de l'arbre de direction 7.

Le module inférieur 16_{A} comprend, par exemple, la boîte à fusibles, non représentée. Le module supérieur 17_{A} présente, notamment, le combiné d'instrumentation 6.

A la figure 4, les éléments 2_{B} constituent, par exemple, un poste pour passagers, apte à s'insérer dans les réservations 5_{B}, 5_{A}.

Ledit poste pour passagers est formé, notamment, d'un module inférieur 16_{B}, d'un module supérieur 17_{B} comprenant, entre autres, l'ensemble pour sacs à air 8.

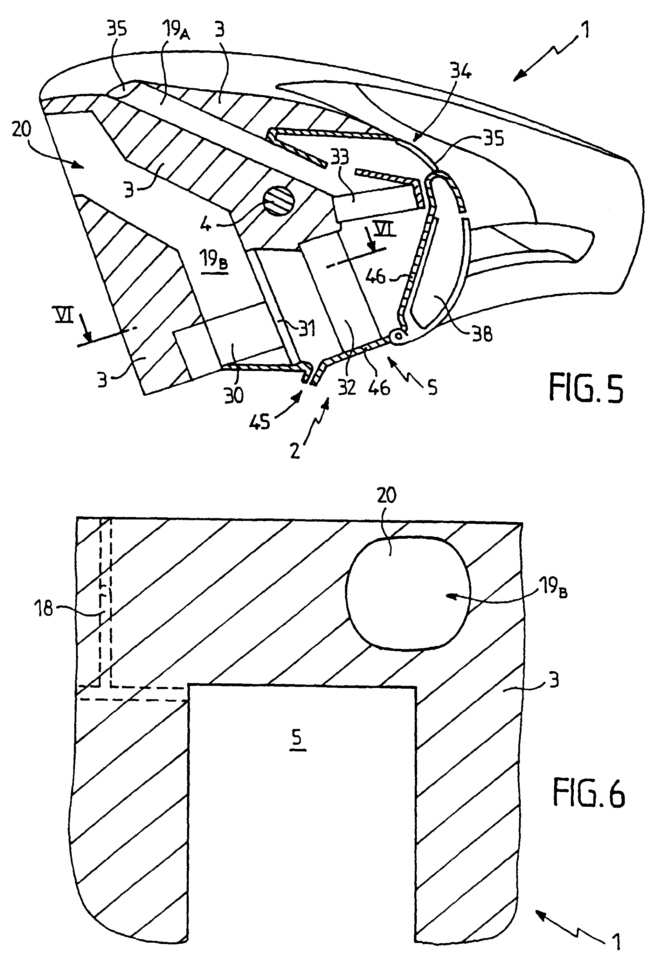

A la figure 5, comme évoqué plus haut, le pulseur et son moteur 30, le filtre 31, l'évaporateur 32, le radiateur 33 et l'aérateur central 34 notamment constituent, par exemple, un dispositif de conditionnement d'air 45, apte à s'insérer dans la réservation 5, prévue dans la zone médiane C.

Il est d'ailleurs à noter que ledit dispositif 45 est fermé, entre autres, par un ou des couvercles 46, participant, notamment, à la canalisation et à l'étanchéïté de la circulation du flux d'air.

Lesdits couvercles 46 sont constitués, notamment, de prolypropylène injecté.

Si l'on se reporte également aux figures 5 et 6, on constate que le bloc 3 est aussi apte, par exemple, en outre, à constituer des conduits de circulation de réseau électrique 18 et/ou de circulation d'air 19_{A}, 19_{B}.

Dans l'exemple représenté, le conduit 19_{B} relie l'entrée d'air 20 au pulseur 30, et le conduit 19_{A} relie la sortie du dispositif de conditionnement d'air 45 à l'aérateur central 34 et à une buse de désembuage 35. Par ailleurs, les conduits 18, notamment en forme de goulotte, reçoivent le faisceau électrique, non représenté à la figure 5, par exemple par clipage.

Le bloc de matière 3 pourra être produit, notamment, grâce à un moule en deux parties munies de tiroirs, apte à assurer la formation des réservations 5 et des conduits 18, 19_{A}, 19_{B}. Par ailleurs, la traverse 4 est, par exemple, surmoulée dans le bloc 3; à cet effet, elle est placée dans le moule de formation du bloc 3.

Les éléments 2 sont introduits dans les dites réservations 5, par exemple, par emmanchage à force ; d'autre part on met à profit les propriétés élastiques du matériau pour obtenir également l'étanchéïté des éléments du dispositif de conditionnement d'air 45. Cela permet ainsi, notamment, de minimiser le nombre d'opérations de rivetage et/ou soudage et facilite la standardisation. De même, les grilles de désembuage et d'aération 35 et les hauts-parleurs 39 sont assemblés, notamment, par clipage dans des réservations 5_{C}, 5_{D}, 5_{E}.

Naturellement, d'autres mises en oeuvre de la présente invention, à la portée de l'homme de l'art, auraient pu être envisagées sans pour autant sortir du cadre de la présente demande.

## Revendications

1. Tableau de bord (1) pour véhicule, apte à permettre, au moins, l'intégration d'éléments (2, 2_{A}, 2_{B}) d'appareillage et/ou d'équipement intérieur du véhicule au niveau d'une cavité s'étendant à partir du tablier du véhicule, ledit tableau de bord présentant au moins une réservation (5, 5_{A}, 5_{B}) caractérisé par le fait qu'il est constitué d'un bloc (3) massif de matière, remplissant ladite cavité, la ou lesdites réservations (5, 5_{A}, 5_{B}), prévues aptes à permettre le support desdits éléments (2) d'appareillage et/ou d'équipement, étant réalisées dans la matière dudit bloc (3).

2. Tableau de bord (1) selon la revendication 1, dans lequel le bloc (3) massif de matière est supporté par au moins une traverse rigide (4) assujettie audit véhicule.

3. Tableau de bord (1) selon la revendication 2, dans lequel ledit bloc de matière (3) entoure ladite traverse (4) au moins sur une partie de sa longueur.

4. Tableau de bord (1) selon la revendication 2, dans lequel ladite traverse (4) est constituée par une barre de renfort latérale du véhicule.

5. Tableau de bord (1) selon la revendication 2, dans lequel ladite traverse (4) est prévue accessible, au moins partiellement, à-travers certaines réservations (5_{A}, 5_{B}).

6. Tableau de bord (1) selon la revendication 1, dans lequel le bloc de matière (3) est constitué d'un matériau synthétique expansé.

7. Tableau de bord (1) selon la revendication 6, dans lequel ledit matériau est constitué de polystyrène et/ou de polypropylène expansé.

8. Tableau de bord (1) selon la revendication 1, dans lequel ledit bloc de matière (3) présente, au moins partiellement, une surface traitée de manière à améliorer son aspect et/ou est revêtu d'une peau.

9. Tableau de bord (1) selon la revendication 1, dans lequel une même réservation (5, 5_{A}, 5_{B}) est apte à recevoir des éléments (2, 2_{A}, 2_{B}) différents.

10. Tableau de bord (1) selon la revendication 1, dans lequel les éléments (2, 2_{A}, 2_{B}) constituent des modules fonctionnels, aptes à s'insérer dans lesdites réservations (5, 5_{A}, 5_{B}), formés de sous-modules spécifiques.

11. Tableau de bord (1) selon la revendication 1, dans lequel le bloc (3) est apte, en outre, à constituer des conduits (18, 19_{A}, 19_{B}).

## Claims

1. Vehicle dashboard (1), capable of permitting, at least, the integration of internal items (2, 2_{A}, 2_{B}) of instruments and accessories and/or equipment of the vehicle in the area of a cavity extending from the front body panel of the vehicle, the said dashboard having at least one location (5, 5_{A}, 5_{B}), characterised by the fact that it is constituted by a solid block (3) of material, filling the said cavity, the said location or locations (5, 5_{A}, 5_{B}), provided so as to be capable of permitting the supporting of the said items (2) of instruments and accessories and/or equipment, being produced in the material of the said block (3).

2. Dashboard (1) according to claim 1, in which the solid block (3) of material is supported by at least one rigid cross member (4) secured to the said vehicle.

3. Dashboard (1) according to claim 2, in which the said block of material (3) surrounds the said cross member (4) at least over a part of its length.

4. Dashboard (1) according to claim 2, in which the said cross member (4) is constituted by a bar for laterally reinforcing the vehicle.

5. Dashboard (1) according to claim 2, in which the said cross member (4) is designed to be accessible, at least partially, through certain locations (5_{A}, 5_{B}).

6. Dashboard (1) according to claim 1, in which the block of material (3) is constituted by an expanded synthetic material.

7. Dashboard (1) according to claim 6, in which the said material is constituted by expanded polystyrene and/or polypropylene.

8. Dashboard (1) according to claim 1, in which the said block of material (3) has, at least partially, a surface treated in such a way as to enhance its appearance and/or is clad with a skin.

9. Dashboard (1) according to claim 1, in which one and the same reservation (5, 5_{A}, 5_{B}) is capable of receiving different items (2, 2_{A}, 2_{B}).

10. Dashboard (1) according to claim 1, in which the items (2, 2_{A}, 2_{B}) constitute functional modules, capable of being inserted into the said locations (5, 5_{A}, 5_{B}), formed by specific sub-modules.

11. Dashboard (1) according to claim 1, in which the block (3) is capable, moreover, of constituting conduits (18, 19_{A}, 19_{B}).

## Patentansprüche

1. Instrumentenbrett (1) für ein Fahrzeug, das geeignet ist, wenigstens die Integrierung von Geräte- und/oder Innenausstattungsteilen (2, 2_{A}, 2_{B}) des Fahrzeugs im Bereich eines Hohlraums, der sich ab der Stirnwand des Fahrzeugs erstreckt, zu erlauben, wobei das genannte Instrumentenbrett wenigstens eine Aussparung (5, 5_{A}, 5_{B}) aufweist, dadurch gekennzeichnet, daß es aus einem massiven Materialblock (3) besteht, der den genannten Hohlraum füllt, wobei die genannten Aussparungen (5, 5_{A}, 5_{B}), die geeignet vorgesehen sind, die Abstützung der genannten die Geräte- und/oder Ausrüstungsteile (2) zu erlauben, im Material des genannten Blocks (3) gebildet werden.

2. Instrumentenbrett (1) nach Anspruch 1, bei dem der massive Materialblock (3) von wenigstens einem steifen, am genannten Fahrzeug befestigten Querträger (4) getragen wird.

3. Instrumentenbrett (1) nach Anspruch 2, bei dem der genannte Materialblock (3) den genannten Querträger (4) wenigstens über einen Teil dessen Länge umgibt.

4. Instrumentenbrett (1) nach Anspruch 2, bei dem der genannte Querträger (4) aus einer Stange zur seitlichen Verstärkung des Fahrzeugs besteht.

5. Instrumentenbrett (1) nach Anspruch 4, bei dem dem der genannte Querträger (4) wenigstens teilweise durch gewisse Aussparungen (5_{A}, 5_{B}) hindurch zugänglich vorgesehen ist.

6. Instrumentenbrett (1) nach Anspruch 1, bei dem der Materialblock (3) aus einem expandierten Kunststoff besteht.

7. Instrumentenbrett (1) nach Anspruch 6, bei dem das genannte Material aus expandiertem Polystyrol und/oder Polypropylen besteht.

8. Instrumentenbrett (1) nach Anspruch 1, bei dem der genannte Materialblock (3) wenigstens zum Teil eine so behandelte Oberfläche aufweist, daß sein Aussehen verbessert wird, und/oder mit einer Haut beschichtigt ist.

9. Instrumentenbrett (1) nach Anspruch 1, bei dem eine selbe Aussparung (5, 5_{A}, 5_{B}) geeignet ist, unterschiedliche Teile (2, 2_{A}, 2_{B}) aufzunehmen.

10. Instrumentenbrett (1) nach Anspruch 1, bei dem die Teile (2, 2_{A}, 2_{B}) funktionelle, aus spezifischen Unterbaukästen bestehenden Baukästen bilden, die geeignet sind, in die genannten Aussparungen (5, 5_{A}, 5_{B}) eingeführt zu werden.

11. Instrumentenbrett (1) nach Anspruch 1, bei dem der Block (3) außerdem geeignet ist, Leitungen (18, 19_{A}, 19_{B}) zu bilden.
